# EUROPEAN PATENT SPECIFICATION

(11) **EP 2 725 639 B1**
(45) Date of publication and mention of the grant of the patent: **04.10.2017**
(21) Application number: 12819327.3
(22) Date of filing: 01.08.2012
(51) Int. Cl.: H01M 2/34, H01M 2/30, H01M 10/04, H01M 10/052, H01M 10/058, H01M 10/42, H01M 2/04, H01M 2/22

(54) **SECONDARY BATTERY PACK**
SEKUNDÄRBATTERIEPACKUNG
BLOC D'ÉLÉMENTS SECONDAIRE

(30) Priority: 04.08.2011 KR 20110077886; 14.02.2012 KR 20120014790
(43) Date of publication of application: 30.04.2014
(73) Proprietor: LG Chem, Ltd., Yeongdeungpo-gu Seoul 150-721 (KR)
(72) Inventor: CHOI, Jong Woon, Daejeon 305-380 (KR); LEE, Dongcheol, Daejon 305-380 (KR); HONG, Eun Pyo, Daejon 305-380 , (KR)
(74) Representative: Cabinet Plasseraud
(86) International application number: PCT/KR2012/006114
(87) International publication number: WO 2013/019066

(56) References cited:
- EP-A1- 1 760 804
- KR-A- 20100 121 336
- KR-A- 20110 023 988
- KR-A- 20110 040 670
- KR-A- 20110 066 774
- KR-A- 20110 066 774
- US-A1- 2005 181 242
- US-A1- 2010 203 374

## Description

### [TECHNICAL FIELD]

The present invention relates to a secondary battery pack.

### [BACKGROUND ART]

As mobile devices have been increasingly developed, and the demand for such mobile devices has increased, the demand for secondary batteries has also sharply increased. Among such secondary batteries is a lithium secondary battery exhibiting high energy density and operating voltage and excellent preservation and service-life characteristics, which has been widely used as an energy source for various electronic products as well as various kinds of mobile devices.

Depending upon kinds of devices in which secondary batteries are used, the secondary batteries may be configured to have a detachable type structure in which the secondary batteries can be easily inserted into and removed from external devices or to have an embedded type structure in which the secondary batteries are embedded in the devices. For example, secondary batteries used in the conventional mobile devices are configured to have a detachable type structure in which it is possible for a user to insert or remove a battery into or from each device. On the other hand, secondary batteries used in devices, such as some mobile phones, tablet PCs, and smart pads, may be configured to have an embedded type structure.

Lithium secondary batteries are widely used as such secondary batteries. Each of the secondary batteries includes an anode terminal and a cathode terminal electrically connected to a device, in which the secondary battery is mounted, and a safety element to effectively control an abnormal state, such as overcharge or overcurrent, of the secondary battery. Examples of the safety element may include a positive temperature coefficient (PTC) element, a protection circuit module (PCM), a fuse, and a thermal cutoff (TCO) element.

Generally, a safety element, such as a PCM, is connected to a battery cell, including an anode terminal and a cathode terminal, via a conductive nickel plates by welding or soldering. For example, the nickel plates are connected to the electrode terminals of the battery cell by welding or soldering, a protection circuit board (PCB) is attached to one side of a double-sided tape, a protective tape is attached to the other side of the double-sided tape, and electrode tabs of the PCB and the nickel plates are connected to each other by welding in a state in which the PCB is in tight contact with the battery cell. In this way, the PCM is connected to the battery cell to manufacture a battery pack.

It is required for the PCM to be maintained in electrical connection with the electrode terminals of the battery cell and, at the same time, to be electrically isolated from other parts of the battery cell. To this end, insulative tapes are attached to various members, including the PCM. In addition, a sealed portion of a battery case is partially bent, and an insulative tape is attached thereon or a barcode is printed thereon. That is, the process is very complicated.

Since a plurality of insulative tapes or parts is required to achieve safe connection between the safety element and the battery cell as described above, a battery pack assembly process is complicated, and manufacturing cost is increased. Also, when external impact is applied to a battery pack, the PCM may be damaged or dimensional stability may be greatly lowered due to the use of the insulative tapes, which exhibit low mechanical strength.

KR20110066774, US2010/203374 and US2005/181242 relate to a secondary battery pack comprising a PCM. EP1760804 describes a no welding contact type secondary battery.

### [DISCLOSURE]

### [TECHNICAL PROBLEM]

It is an object of the present invention to provide a secondary battery pack that is capable of covering a protection circuit board of a secondary battery cell using an electrically insulative case, thereby protecting the protection circuit board from external impact, insulating the protection circuit board, and preventing electrode terminals of the secondary battery cell from being exposed outside.

It is another object of the present invention to provide a secondary battery pack that is capable of reducing the number of parts necessary to constitute the battery pack, thereby simplify an assembly process and exhibiting excellent structural stability.

It is another object of the present invention to provide a secondary battery pack configured to have a structure in which a protection circuit module including a protection circuit board and a case, in which the protection circuit board is disposed, is mounted to an outer circumference of a battery cell, thereby providing maximum capacity in the same standard.

It is a further object of the present invention to provide a protection circuit module that is capable of a protection circuit module that is capable of protecting a safety element from external impact, exhibiting dimensional stability, and preventing wrinkles from being formed at an outer face of a battery pack.

### [TECHNICAL SOLUTION]

A secondary battery pack according to an embodiment of the present invention includes a battery cell having an anode terminal and a cathode terminal formed at one face having a sealed surplus portion and a protection circuit module (PCM) electrically connected to the battery cell via the anode terminal and the cathode terminal. The PCM includes a board having a protection circuit formed thereon, the board being provided with an anode terminal connection part and a cathode terminal connection part connected to the anode terminal and the cathode terminal, respectively, and a PCM case configured to receive the board through an open face thereof so that the PCM case surrounds the board. The board is coupled to the anode terminal and the cathode terminal of the battery cell via the anode terminal connection part and the cathode terminal connection part, the board is disposed in the PCM case, and the PCM case, in which the board is disposed, is mounted to the sealed surplus portion of the battery cell. The PCM case receives the board in a state in which the board is disposed in parallel to the battery cell.

In this embodiment, the battery cell may be a plate-shaped battery cell, and the anode terminal and the cathode terminal may be plate-shaped conductive members.

In this embodiment, the board may further include an external input and output terminal. The external input and output terminal may be formed at the board at which the anode terminal connection part and the cathode terminal connection part are formed via an interconnection part.

In this embodiment, the external input and output terminal may be formed on the board at which the anode terminal connection part and the cathode terminal connection part are formed.

In this embodiment, the external input and output terminal may be formed at the other face of the board at which the anode terminal connection part and the cathode terminal connection part are formed.

In this embodiment, the PCM case may further include an opening formed at a face adjacent to the open face thereof so that the external input and output terminal is exposed outside through the opening. Also, the PCM case may include a slit type opening as an example of the opening.

In this embodiment, the secondary battery pack may further include an insulative tape additionally attached to an electrode terminal exposure region of the sealed surplus portion. The insulative tape may be, for example, a double-sided tape.

In this embodiment, the secondary battery pack may further include an insulative tape additionally attached to at least one of outer faces of the PCM case.

In this embodiment, the battery cell may be configured to have a structure in which an electrode assembly, including cathodes, anodes, and separators respectively disposed between the cathodes and the anodes, is disposed in a battery case made of a laminate sheet including a metal layer and a resin layer in a sealed state. The secondary battery pack includes at least one groove formed at an edge of the open face of the PCM case.

In this embodiment, the secondary battery pack may further include a nickel plate additionally mounted to one face of the cathode terminal, to which the cathode terminal connection part of the board is coupled, by ultrasonic welding.

In this embodiment, the secondary battery pack may further include a label to cover the battery cell. The label may be configured to have a structure to cover sealed outer circumferences of the battery cell.

A protection circuit module according to another embodiment of the present invention includes a protection circuit board having an anode terminal connection part and a cathode terminal connection part connected to an anode terminal and a cathode terminal of a battery cell, respectively, and a PCM case configured to receive the protection circuit board through an open face thereof.

In the protection circuit module according to this embodiment, the protection circuit board may be connected to the anode terminal and the cathode terminal of the battery cell via the anode terminal connection part and the cathode terminal connection part, the protection circuit board may be disposed in the PCM case, and the PCM case, in which the board is disposed, may be mounted to a sealed surplus portion of the battery cell.

In the protection circuit module according to this embodiment, the cathode terminal and the anode terminal may be bent as if the cathode terminal and the anode terminal are wound toward the sealed surplus portion of the battery cell so that the PCM case is mounted to the sealed surplus portion of the battery cell.

In the protection circuit module according to this embodiment, the PCM case may be configured to have a box structure opened at one face thereof.

In the protection circuit module according to this embodiment, the protection circuit board may further include an external input and output terminal coupled to the board at which the anode terminal connection part and the cathode terminal connection part are formed via an interconnection part. The PCM case may further include an opening, through which the interconnection part extends, formed at a face adjacent to the open face thereof. Also, the PCM case may include, for example, a slit type opening.

A method of manufacturing a secondary battery pack according to claim 1 includes a step of forming a battery cell configured to have a structure in which an electrode assembly, including cathodes, anodes, and separators respectively disposed between the cathodes and the anodes, is disposed in a battery case in a sealed state, one of sealed outer circumferences of the battery cell having a surplus portion, a step of receiving a board into a case opened at one face thereof in an extension direction identical to an extension direction of the sealed surplus portion in a state in which the board is parallel to the battery cell, and a step of mounting the case to the sealed surplus portion of the battery cell.

In the method of manufacturing the secondary battery pack according to this embodiment, the step of mounting the case to the sealed surplus portion of the battery cell may include a step of bending a cathode terminal and an anode terminal as if the cathode terminal and the anode terminal are wound toward the sealed surplus portion of the battery cell.

### [ADVANTAGEOUS EFFECTS]

The secondary battery pack according to the present invention is configured to have a structure in which the PCM, in which the PCB is disposed in the PCM case, is mounted to the sealed surplus portion of the battery cell. Consequently, it is possible to effectively protect the PCM and to greatly reduce the number of parts constituting the secondary battery pack, thereby greatly improving manufacturing efficiency, as compared with the conventional internal type secondary battery pack.

Also, the secondary battery pack according to the present invention is configured to have a structure in which the PCB is mounted in the PCM case in an insertion fashion. Consequently, it is possible to greatly reduce the number of parts constituting the secondary battery pack, thereby greatly improving manufacturing efficiency, thereby easily manufacturing the secondary battery pack, relatively reducing a defect rate, and configuring the secondary battery pack so that the secondary battery pack has no wrinkles formed at the outer face thereof, i.e. a neat and clean external appearance, as compared with the conventional internal type secondary battery pack in which the PCM is insulated using a tape.

In addition, the secondary battery pack according to the present invention is configured to have a structure in which the PCB is mounted to the sealed surplus portion of the battery cell in a direction facing the upper end of the main body of the battery cell in a state in which the PCB is erected perpendicularly to the battery cell. Consequently, it is possible to reduce the length of the sealed surplus portion and to increase the capacity of the secondary battery pack per unit volume, as compared with the structure in which the PCB is mounted to the sealed surplus portion in parallel.

### [BRIEF DESCRIPTION OF DRAWINGS]

The above and other objects, features and other advantages of the present invention will be more clearly understood from the following detailed description taken in conjunction with the accompanying drawings, in which:
FIG. 1 is an exploded perspective view of a secondary battery pack according to an embodiment of the present invention;
FIGS. 2 to 8 are perspective views showing a method of manufacturing the secondary battery pack of FIG. 1;
FIG. 9 is an enlarged perspective view showing "B" region of FIG. 7; and
FIG. 10 is a perspective view of a secondary battery pack according to another embodiment of the present invention.

### [DETAILED DESCRIPTION OF THE INVENTION]

Now, exemplary embodiments of the present invention will be described in detail with reference to the accompanying drawings. It should be noted, however, that the embodiments will be described only for a better understanding of the present invention, and therefore, the scope of the present invention is not limited by the illustrated embodiments.

A secondary battery pack according to an embodiment of the present invention includes a battery cell having four sealed outer circumferences and a safety element mounted to a sealed outer circumference having a surplus portion, which is one of the outer circumferences. A safety element according to an embodiment of the present invention may include a first safety element and a second safety element. The first safety element may be a protection circuit, and the second safety element may be a positive temperature coefficient (PTC) element, a fuse, or a thermal cutoff (TCO) element. Also, the second safety element may be mounted in a protection circuit module (PCM) in the form of a part.

The safety element according to the embodiment of the present invention may be a PCM. The PCM may include a protection circuit board and a case, in which the protection circuit board is disposed. For the convenience of description, a PCM will be described as being adopted as the safety element, and the PCM will be described as including a protection circuit board (PCB) in this specification, to which, however, the safety element according to the embodiment of the present invention is not limited.

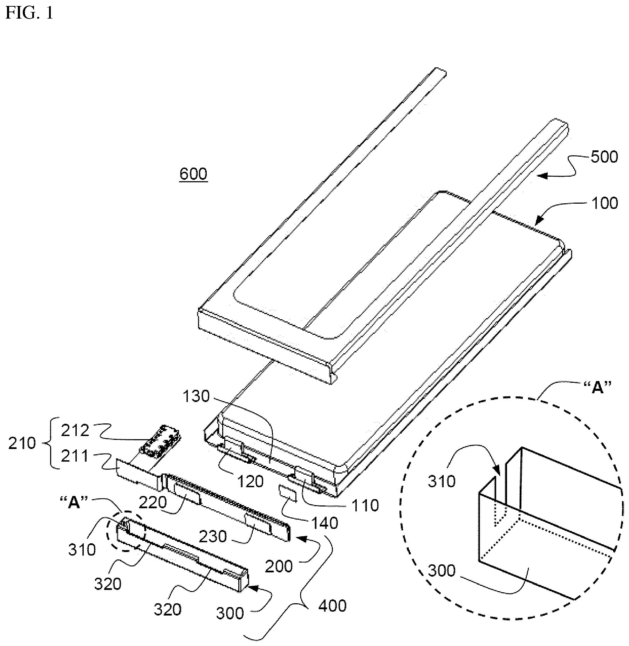

Hereinafter, a secondary battery pack according to an embodiment of the present invention will be described with reference to FIG. 1. FIG. 1 typically shows an exploded perspective view of a secondary battery pack according to an embodiment of the present invention.

Referring to FIG. 1, a secondary battery pack 600 may include an anode terminal 120, a cathode terminal 110, a battery cell 100, a PCM 400, and a label 500.

A battery cell 100 according to an embodiment of the present invention is a pouch-shaped battery cell configured so that an electrode assembly of a cathode/separator/anode structure is disposed in a battery case made of a laminate sheet including a metal layer and a resin layer in a sealed state, to which, however, the battery cell according to the embodiment of the present invention is not limited.

Referring to FIG. 1, the battery cell 100 includes a sealed surplus portion 130 formed at one face thereof and an anode terminal 120 and a cathode terminal 110 exposed to the sealed surplus portion 130. The term 'face' used in this specification indicates an arbitrary face of a tetrahedron with four faces, and is understood as including a side, a section, or an end. Also, in this specification, a sealed portion having a surplus space formed at one of the sealed outer circumferences formed when an electrode assembly is disposed in a battery case made of a laminate sheet in a sealed state is referred to as a sealed surplus portion 130. As shown in FIG. 1, the sealed surplus portion 130 may be formed by extending a sealed portion formed at an arbitrary section of the battery cell in a direction perpendicular to the longitudinal direction of the section. Although the term 'sealed surplus portion' is used in this specification, a person having ordinary skill in the art to which the present invention pertains will appreciate that the sealed surplus portion may be replaced by terms, such as a thermal welded surplus portion and a sealed terrace, as long as the specified terms have the same meaning as the sealed surplus portion.

An anode terminal 120 and a cathode terminal 110 according to an embodiment of the present invention are plate-shaped conductive members. The anode terminal 120 and the cathode terminal 110 are electrically connected to a PCB 200 of a PCM 400, which will hereinafter be described.

A PCM 400 according to an embodiment of the present invention may include a PCB 200 having a protection circuit, an electrically insulative PCM case 300, in which the PCB 200 is disposed, and an external input and output terminal 210.

Referring to FIG. 1, the PCB 200 is a board including a protection circuit. The PCB may be referred to as a protection circuit board or simply a board. The PCB 200 may further include an anode terminal connection part 220 connected to the anode terminal 120 of the battery cell 100 and a cathode terminal connection part 230 connected to the cathode terminal 110 of the battery cell 100 on the board in addition to the protection circuit to control overcharge, overdischarge, and overcurrent of the battery. In addition to the protection circuit and the two connection parts 220 and 230, the PCB 200 may further include an external input and output terminal 210 connected to the board via a interconnection part 211 connected to one end of the board, as shown in FIG. 1.

An external input and output terminal 210 according to an embodiment of the present invention is not particularly restricted so long as the external input and output terminal can be electrically connected to the PCB 200 to supply current from an external device, such as a charger, to the battery cell 100 or to supply current from the battery cell 100 to an external device, such as a mobile phone, an MP3 player, etc. For example, the external input and output terminal 210 may be configured to have a plate structure having a connector 212 mounted to one end thereof.

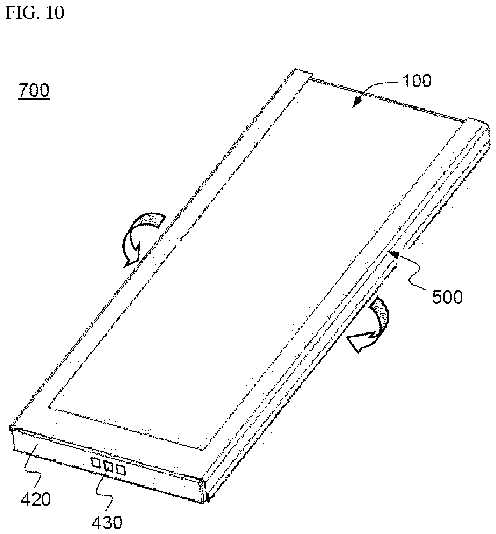

Also, unlike the embodiment shown in FIG. 1, the external input and output terminal may be formed on the board on which the anode terminal connection part and the cathode terminal connection part are formed without being connected to the PCB 200 via the interconnection part. A secondary battery pack with the above-stated construction is shown in FIG. 10. In a case in which an external input and output terminal is formed on a PCB, openings are formed at a region of a PCM case 420 (see FIG. 10), in which the PCB is disposed, corresponding to an external input and output terminal 430 (see FIG. 10). The external input and output terminal may be electrically connected to an external device through the openings.

An anode terminal connection part 220 according to an embodiment of the present invention may include a part coupled to the PCB 200 and an extension part that can be bent when the anode terminal connection part 220 is connected to the anode terminal 120 of the battery cell 100. In the same manner, a cathode terminal connection part 230 according to an embodiment of the present invention may include a part coupled to the PCB 200 and an extension part that can be bent when the cathode terminal connection part 230 is connected to the cathode terminal 110 of the battery cell 100.

As shown in FIG. 1, the external input and output terminal 210 according to the embodiment of the present invention is configured to have a plate structure having a connector 212 mounted to one end thereof, to which, however, the external input and output terminal 210 is not limited. Also, as shown in FIG. 1, the external input and output terminal 210 is configured to face in a direction opposite to a direction in which the anode terminal connection part 220 and the cathode terminal connection part 230 face, which, however, is only an example. According to another embodiment of the present invention, the external input and output terminal 210 may be configured to face in the same direction as a direction in which the anode terminal connection part 220 and the cathode terminal connection part 230 face.

A PCM case 300 according to the embodiment of the present invention is configured to have a hollow box structure opened at one face thereof so that the PCB 200 can be mounted in the PCM case 300 through the open face. Consequently, dimensional stability of the PCM case 300 is high, and it is possible to greatly reduce mounting time and process. Here, the mounting time means time required for an assembly process of placing the PCB 200 in the PCM case 300 and assembling the PCB 200 with the PCM case 300. Reduction of the mounting time means reduction of time required for the assembly process, and therefore, it is possible to greatly simplify the process.

The PCM case 300 may have a size sufficient to receive and surround the PCB 200 mounted on the sealed surplus portion 130 of the battery cell 100. In addition, in a case in which the PCB 200 includes the external input and output terminal 210 connected thereto via the interconnection part 211, as shown in FIG. 1, an opening, through which the external input and output terminal 210 is exposed, may be formed at a face (for example, a part indicated by 'A' in FIG. 1) of the PCM case 300 adjacent to the open face. For example, as can be seen from 'A' part shown in FIG. 1, a slit type opening 310 may be formed at the PCM case.

A secondary battery pack according to another embodiment of the present invention may be configured so that a safety element is further mounted between at least one of the electrode terminals, i.e. the anode terminal and/or the cathode terminal, of the battery cell and the PCB. In this case, the safety element may be disposed between, for example, the anode terminal of the battery and the PCB. The safety element is mounted in the PCM case together with the PCB so that the structural stability of the safety element is secured.

Consequently, it is possible to directly connect the cathode terminal of the battery cell to the cathode terminal connection part of the PCB and to connect one side of the safety element to the safety element connection part disposed on the same face of the PCB in a state in which the anode terminal is connected to the other side of the safety element without shape deformation or further use of additional members, and therefore, it is possible to stably mount the safety element, the structural strength is low, to the PCB, thereby reducing a defect rate in a manufacturing process and improving manufacturing efficiency.

The safety element is a member which interrupts current when the temperature of the battery cell is increased to secure safety. For example, the safety element may be a PTC element, the resistance of which increases as the temperature of the battery cell is increased, or a fuse, which is broken when the temperature of the battery cell is increased. However, the safety element is not limited to the PTC element and the fuse.

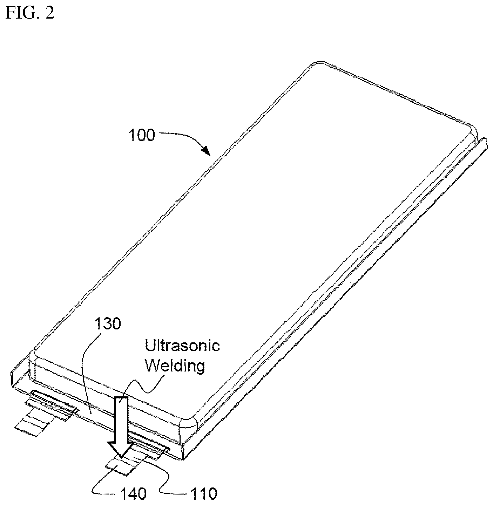

Hereinafter, a method of manufacturing the secondary battery pack shown in FIG. 1 will be described with reference to FIGS. 2 to 8. FIGS. 2 to 8 are various perspective views of a secondary battery pack illustrating a method of manufacturing the secondary battery pack.

Referring first to FIG. 2, a surplus portion, i.e. a sealed surplus portion 130, is formed at one of sealed faces of a battery cell 100, and an anode terminal 120 and a cathode terminal 110 of the battery cell 100 are disposed on the sealed surplus portion 130. The sealed surplus portion 130 has a size sufficient to receive a PCM 400, in which a PCB 200 is coupled with a PCM case 300, and the size of the PCM case 300 may be greater or less than that of the sealed surplus portion 130. A person having ordinary skill in the art to which the present invention pertains will appreciate that the size of the PCM case 300 may be properly adjusted based on the capacity and shape of the battery cell.

Subsequently, as shown in FIG. 2, a nickel plate 140 may be coupled to a portion of the cathode terminal 110, for example, by ultrasonic welding. In a case in which the nickel plate 140 is mounted to the cathode terminal 110, it is possible to prevent deterioration of weldability between the cathode terminal, made of aluminum, of the battery cell and a PCB cathode terminal connection part made of nickel due to different properties.

Also, in another embedment of the present invention, as previously described, an additional safety element, such as a PTC element, may be selectively mounted between the anode terminal 120 and an anode terminal connection part 220 to secure stability.

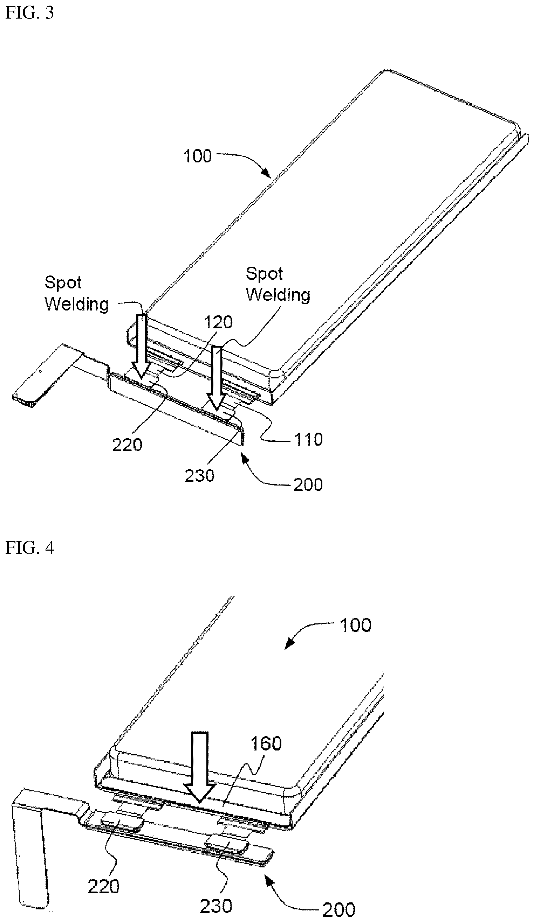

Subsequently, as shown in FIG. 3, the anode terminal connection part 220 and a cathode terminal connection part 230 formed at the PCB 200 are welded to the anode terminal 120 and the cathode terminal 110 of the battery cell 100, respectively, for example, by spot welding. In a case in which the nickel plate 140 is welded to the cathode terminal 110 as shown in FIG. 2, the cathode terminal connection part 230 is welded to the nickel plate 140.

Since the anode terminal connection part 220 and the cathode terminal connection part 230 each include a part coupled to the PCB 200 and a bendable extension part as described above, the anode terminal connection part 220 and the cathode terminal connection part 230 of the PCB 200 may be coupled to the anode terminal 120 and the cathode terminal 110 of the battery cell 100, respectively, by welding so that the PCB 200 is opposite to one face of the battery cell 100 at which the sealed surplus portion 130 is formed, as can be seen from FIG. 3.

Referring to FIG. 4 together with FIG. 1, after the anode terminal connection part 220 and the cathode terminal connection part 230 are bent, an adhesive tape 160, serving as an insulation tape, may be attached to an electrode terminal exposure region of the sealed surplus portion 130 of the main body of the battery cell 100. In a case in which the insulation tape is further attached to the electrode terminal exposure region of the sealed surplus portion 130 as described above, it is possible to more effectively improve insulativity of the electrode terminal exposure region. Also, in a case in which the insulation tape is a double-sided tape, the double-side tape provides coupling force between the PCM case and the sealed surplus portion when the PCM case is mounted to the PCB, thereby further improving structural stability.

As shown in FIG. 4, the PCB 200 is disposed in a direction parallel to the battery cell 100 so that the anode terminal connection part 220 and the cathode terminal connection part 230 of the PCB 200 face upward, and an external input and output terminal 210 of the PCB 200 faces downward.

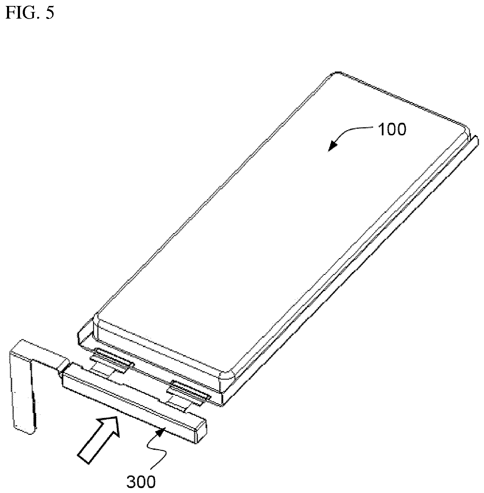

Referring to FIG. 5, in a state in which the anode terminal connection part 220 and the cathode terminal connection part 230 of the PCB 200 face upward, i.e. the anode terminal connection part 220 and the cathode terminal connection part 230 of the PCB 200 is not opposite to one face of the battery cell 100 but are disposed in a direction parallel to the extension direction of the sealed surplus portion 130, the PCM case 300 may be coupled with the PCB 200 in an arrow direction shown in FIG. 5. Specifically, in a state in which an open face of the PCM case 300 is opposite to the face of the battery cell at which the sealed surplus portion 130 is formed, the PCM case 300 may be coupled with the PCB 200 in a direction parallel to the extension direction of the sealed surplus portion 130.

Also, the PCM case 300 may be coupled to the PCB 200 downward from above (a direction perpendicular to the arrow direction, not shown).

Also, in a case in which an external input and output terminal 210 is connected to the connection parts of the PCB 200 via a interconnection part as shown in FIG. 1, an opening, e.g. a slit type opening 310, may be formed at one face of the PCM case 300 corresponding to a interconnection part 211 of the PCB 200 so that the external input and output terminal 210 is exposed outside. Since the interconnection part 211 of the PCB 200 extends through the slit type opening 310, the external input and output terminal 210 connected to the interconnection part 211 is exposed outside.

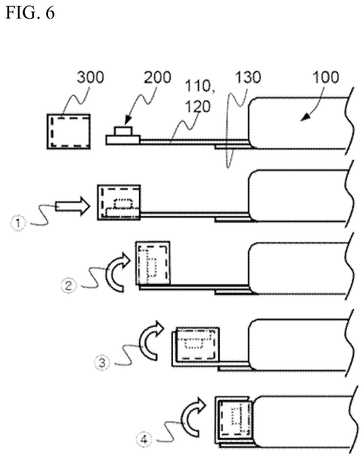

Hereinafter, a process of mounting the PCM case 300, in which the PCB 200 is disposed, to the sealed surplus portion 130 of the battery cell 100 will be described with reference to FIGS. 6, 7, and 8. As previously described with reference to FIG. 5, when the cathode terminal connection part 230 and the anode terminal connection part 220 of the PCB 200 are welded to the cathode terminal 110 and the anode terminal 120 of the battery cell 100, respectively, and the PCM case 300 is put on the PCB 200 (see an arrow indicated by ① in FIG. 6) in a state in which the PCB 200 is disposed in a direction parallel to the extension direction of the sealed surplus portion 130, the cathode terminal 110 and the anode terminal 120 of the battery cell 100 are exposed outside. In this state, the cathode terminal 110 and the anode terminal 120 are bent as if the cathode terminal 110 and the anode terminal 120 are wound toward the sealed surplus portion 130 so that the PCM case 300 is mounted to the sealed surplus portion 130 of the battery cell 100.

As one example, FIG. 6 shows that the cathode terminal 110 and the anode terminal 120 are bent a total of three times by approximately 90 degrees each time (see an arrow indicated by ②, ③, and ④ in FIG. 6), and then the PCM 400 is mounted to the sealed surplus portion 130, to which, however, the present invention is not limited. For example, in a case in which the length of each of the electrode terminals of the battery cell is shorter, the number of times the electrode terminals are bent so that the PCM is mounted to the sealed surplus portion may be decreased. On the other hand, in a case in which the length of each of the electrode terminals of the battery cell is longer, the number of times the electrode terminals are bent so that the PCM is mounted to the sealed surplus portion may be increased. Also, the number of times the electrode terminals are bent so that the PCM is mounted to the sealed surplus portion may be adjusted depending upon the size of the PCM case in which the PCB is disposed.

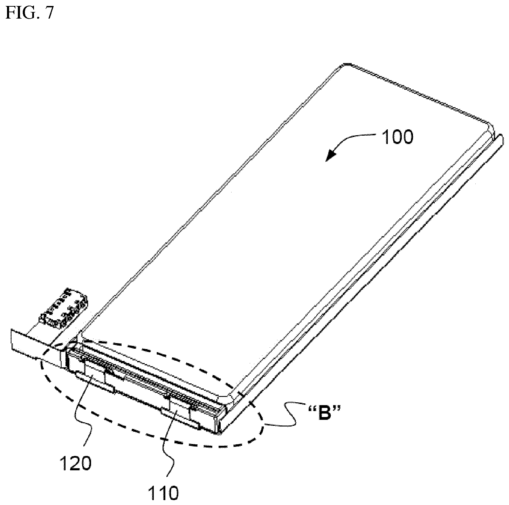

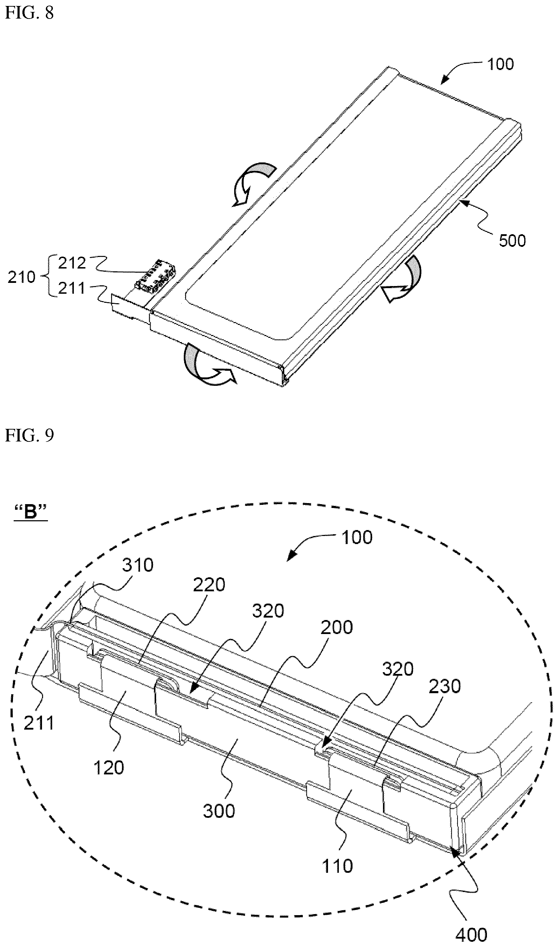

A state in which the PCM is finally mounted to the sealed surplus portion is shown in FIG. 7. A region at which the PCM is mounted to the sealed surplus portion (for example, "B" of FIG. 7) is shown in FIG. 9 in detail. As shown in FIG. 9, the PCB 200 including the cathode terminal connection part 230 and the anode terminal connection part 220 may be disposed in the PCM case 300, and the PCB 200 disposed in the PCM case 300 may be vertically mounted to the sealed surplus portion 130.

Also, it can be seen from FIG. 9 that an open face of the PCM case 300 faces upward, a face opposite to the open face is positioned on the sealed surplus portion 130, and the cathode terminal 110 and the anode terminal 120 are exposed through the open face. However, the structure as described above is only an example. For example, the open face of the PCM 400 may face downward. Alternatively, the open face of the PCM 400 may face to the side.

Referring back to FIG. 9, since the cathode terminal 110 and the anode terminal 120 are bent once or more, and then the PCM case 300 is mounted to the sealed surplus portion 130, as previously described, grooves 320 may be selectively formed at one of edges opposite to the open face of the PCM case so that the exposed faces of the cathode terminal 110 and the anode terminal 120 are not indented due to bending when the bent cathode terminal 110 and the bent anode terminal 120 are exposed through the open face of the PCM case 300. The grooves 320 may have a size and shape corresponding to the width and thickness of the cathode terminal 110 and the anode terminal 120.

In addition, in a case in which a slit type opening is formed at the PCM case as shown in FIG. 1, it can be seen from FIG. 9 that the interconnection part 211 of the PCB 200 may extend through the slit type opening so that the interconnection part 211 can be exposed outside.

When the PCB 200 is mounted to the sealed surplus portion 130 formed at one face of the battery cell 100 as described above, the PCB 200 is mounted perpendicularly to the sealed surplus portion 130. In a case in which it is difficult for the sealed surplus portion 130 to have a sufficient size, therefore, the size of the PCB 200 may be reduced.

FIG. 8 is a view showing a state in which a label 500 covers the PCM case 300 and the battery cell 100 in a state in which the PCB 200 mounted to sealed surplus portion 130 of the battery cell 100 is disposed in the PCM case 300. The label 500 according to the present invention may be configured to cover the outer faces of the PCM case 300 and the sealed outer circumferences of the battery cell 100 (see arrow directions in FIG. 8) so that the external input and output terminal can be exposed outside. For example, as shown in FIG. 8, the label 500 may be attached to cover the outer faces of the PCM 400 and the sealed outer circumferences of the battery cell 100 excluding the external input and output terminal exposed outside.

In a case in which the label 500 is attached to the battery cell, it is possible to stably fix the sealed outer circumferences of the battery cell to the main body of the battery cell while maintaining the overall insulation state, thereby more stably securing the electrical connection state between the electrode terminals of the battery cell and the PCB.

FIG. 10 is a perspective view of a secondary battery pack according to another embodiment of the present invention configured so that an external input and output terminal is mounted to a PCB. Referring to FIG. 10, as previously described, a secondary battery pack 700 is configured to have a structure in which an external input and output terminal 430 is formed at one face of the PCB (not shown) so that the external input and output terminal 430 is exposed outside through a PCM case 420.

As is apparent from the above description, the secondary battery pack according to the present invention is configured so that the PCM 400, in which the protection circuit board electrically connected to the cathode terminal and the anode terminal of the battery cell is disposed in the case, is mounted to the sealed surplus portion formed at one face of the battery cell. Consequently, it is possible to effectively protect the PCM and to greatly reduce the number of parts constituting the secondary battery pack, thereby greatly improving manufacturing efficiency, as compared with the conventional secondary battery pack.

Also, the secondary battery pack according to the present invention is configured so that the protection circuit board is disposed in the electrically insulative case. Consequently, it is possible to protect and insulate the PCM including the protection circuit board. Also, it is possible to easily prevent the electrode terminals from being exposed outside without insulation of the electrode terminals through the use of additional members.

Furthermore, the secondary battery pack according to the present invention is configured so that the protection circuit board is mounted in the case. Consequently, it is possible to easily manufacture the secondary battery pack, to relatively reduce a defect rate, and to configure the secondary battery pack so that the secondary battery pack has no wrinkles formed at the outer face thereof, i.e. a neat and clean external appearance, as compared with the conventional secondary battery pack in which the PCM is insulated using a tape.

In addition, the secondary battery pack according to the present invention is configured so that the protection circuit board is mounted to the sealed surplus portion formed at one face of the battery cell. Consequently, it is possible to reduce the length of the sealed surplus portion and to increase the capacity of the battery pack per unit volume, as compared with the conventional secondary battery pack.

Meanwhile, in a general process of assembling the secondary battery pack, the connection members and the PCM are coupled, and an insulative tape is attached at each step, to the PCM assembly is mounted to the battery cell, as previously described. That is, the PCM assembly is mounted to the battery cell using a plurality of parts with the result that a plurality of processes is required, and structural stability as well as mechanical strength is low.

On the other hand, the protection circuit module according to the present invention is configured to have a structure in which the protection circuit board is mounted in the case, and therefore, it is possible to improve structural stability of the battery pack, to greatly simplify the process of manufacturing the battery pack, to secure excellent insulativity, and to maximize the capacity of the battery cell in the battery pack having the same standard as the conventional battery pack.

Also, in the manufacturing method according to the present invention, it is possible to protect and insulate the PCM using the case without an additional member, such as a label or an insulative tape. Also, the protection circuit board is electrically connected to the electrode terminals, the electrode terminals are bent, and then the protection circuit board is mounted in the case with the result that no exposed region is formed during the bending process, and therefore, an additional insulative member is not required.

## Claims

1. A secondary battery pack comprising:
a battery cell having an anode terminal and a cathode terminal formed at one face having a sealed surplus portion; and
a protection circuit module (PCM) electrically connected to the battery cell via the anode terminal and the cathode terminal, wherein
the PCM comprises:
a board having a protection circuit formed thereon, the board being provided with an anode terminal connection part and a cathode terminal connection part connected to the anode terminal and the cathode terminal, respectively; and
a PCM case configured to receive the board through an open face thereof so that the PCM case surrounds the board, and
the board is coupled to the anode terminal and the cathode terminal of the battery cell via the anode terminal connection part and the cathode terminal connection part, the board is disposed in the PCM case, and the PCM case, in which the board is disposed, is mounted to the sealed surplus portion of the battery cell, **characterized in that**:
the PCM case receives the board in a state in which the board is disposed in parallel to the upper end of the battery cell,
the cathode terminal and the anode terminal are exposed through the open face of the PCM case, and
the secondary battery pack further comprises at least one groove formed at an edge of the open face of the PCM case.

2. The secondary battery pack according to claim 1, wherein the battery cell is a plate-shaped battery cell, and the anode terminal and the cathode terminal are plate-shaped conductive members.

3. The secondary battery pack according to claim 1, wherein the board further comprises an external input and output terminal.

4. The secondary battery pack according to claim 3, wherein the external input and output terminal is formed at the board at which the anode terminal connection part and the cathode terminal connection part are formed via an interconnection part.

5. The secondary battery pack according to claim 3, wherein the external input and output terminal is formed on the board at which the anode terminal connection part and the cathode terminal connection part are formed.

6. The secondary battery pack according to claim 3, wherein the external input and output terminal is formed at the other face of the board at which the anode terminal connection part and the cathode terminal connection part are formed.

7. The secondary battery pack according to claim 4, wherein the PCM case further comprises an opening formed at a face adjacent to the open face thereof

8. The secondary battery pack according to claim 7, wherein the opening is a slit type opening.

9. The secondary battery pack according to claim 1, further comprising an insulative tape additionally attached to an electrode terminal exposure region of the sealed surplus portion.

10. The secondary battery pack according to claim 9, wherein the insulative tape is a double-sided tape.

11. The secondary battery pack according to claim 1, further comprising an insulative tape additionally attached to at least one of outer faces of the PCM case.

12. The secondary battery pack according to claim 1, wherein the battery cell is configured to have a structure in which an electrode assembly, comprising cathodes, anodes, and separators respectively disposed between the cathodes and the anodes, is disposed in a battery case made of a laminate sheet comprising a metal layer and a resin layer in a sealed state.

13. The secondary battery pack according to claim 1, further comprising a nickel plate additionally mounted to one face of the cathode terminal, to which the cathode terminal connection part of the board is coupled, by ultrasonic welding.

14. The secondary battery pack according to claim 1, further comprising a label to cover the battery cell.

15. The secondary battery pack according to claim 14, wherein the label is configured to have a structure to cover sealed outer circumferences of the battery cell.

16. A method of manufacturing a secondary battery pack according to claim 1 comprising:
a step of forming a battery cell configured to have a structure in which an electrode assembly, comprising cathodes, anodes, and separators respectively disposed between the cathodes and the anodes, is disposed in a battery case in a sealed state, one of sealed outer circumferences of the battery cell having a surplus portion;
a step of receiving a board into a case opened at one face thereof in an extension direction identical to an extension direction of the sealed surplus portion in a state in which the board is parallel to the battery cell; and
a step of mounting the case to the sealed surplus portion of the battery cell.

17. The method according to claim 16 wherein the step of mounting the case to the sealed surplus portion of the battery cell comprises a step of bending a cathode terminal and an anode terminal as if the cathode terminal and the anode terminal are wound toward the sealed surplus portion of the battery cell.

## Patentansprüche

1. Sekundärbatteriepack, mit:
einer Batteriezelle mit einem Anodenanschluss und einem Kathodenanschluss, die an einer Fläche mit einem abgedichteten Überschussabschnitt ausgebildet sind; und
einem Schutzschaltungsmodul (PCM), das mit der Batteriezelle über den Anodenanschluss und den Kathodenanschluss elektrisch verbunden ist, wobei
das PCM aufweist:
eine Platte mit einer daran ausgebildeten Schutzschaltung, wobei die Platte mit einem Anodenanschluss-Verbindungsteil und einem Kathodenanschluss-Verbindungsteil versehen ist, die mit den Anodenanschluss beziehungsweise dem Kathodenanschluss verbunden sind; und
ein PCM-Gehäuse, das ausgestaltet ist, um die Platte durch eine offene Fläche davon aufzunehmen, so dass das PCM-Gehäuse die Platte umgibt, und
wobei die Platte über den Anodenanschluss-Verbindungsteil und den Kathodenanschluss-Verbindungsteil an den Anodenanschluss und den Kathodenanschluss der Batteriezelle gekoppelt ist, die Platte in dem PCM-Gehäuse angeordnet ist, und das PCM-Gehäuse, in welchem die Platte angeordnet ist, an dem abgedichteten Überschussabschnitt der Batteriezelle montiert ist,
**dadurch gekennzeichnet, dass**:
das PCM-Gehäuse die Platte in einem Zustand aufnimmt, in welchem die Platte parallel zu dem oberen Ende der Batteriezelle angeordnet ist,
der Kathodenanschluss und der Anodenanschluss durch die offene Fläche des PCM-Gehäuses freigelegt sind, und
der Sekundärbatteriepack ferner zumindest eine Nut aufweist, die an einem Rand der offenen Fläche des PCM-Gehäuses ausgebildet ist.

2. Sekundärbatteriepack nach Anspruch 1, wobei die Batteriezelle eine plattenförmige Batteriezelle ist, und der Anodenanschluss und der Kathodenanschluss plattenförmige leitfähige Elemente sind.

3. Sekundärbatteriepack nach Anspruch 1, wobei die Platte ferner einen externen Eingangs- und Ausgangsanschluss aufweist.

4. Sekundärbatteriepack nach Anspruch 3, wobei der externe Eingangs- und Ausgangsanschluss über einen Zusammenschaltungsteil an der Platte ausgebildet ist, an welcher der Anodenanschluss-Verbindungsteil und der Kathodenanschluss-Verbindungsteil ausgebildet sind.

5. Sekundärbatteriepack nach Anspruch 3, wobei der externe Eingangs- und Ausgangsanschluss an der Platte ausgebildet ist, an welcher der Anodenanschluss-Verbindungsteil und der Kathodenanschluss-Verbindungsteil ausgebildet sind.

6. Sekundärbatteriepack nach Anspruch 3, wobei der externe Eingangs- und Ausgangsanschluss an der anderen Fläche der Platte ausgebildet ist, an welcher der Anodenanschluss-Verbindungsteil und der Kathodenanschluss-Verbindungsteil ausgebildet sind.

7. Sekundärbatteriepack nach Anspruch 4, wobei das PCM-Gehäuse ferner eine Öffnung aufweist, die an einer Fläche angrenzend zu der offenen Fläche davon ausgebildet ist.

8. Sekundärbatteriepack nach Anspruch 7, wobei die Öffnung eine schlitzartige Öffnung ist.

9. Sekundärbatteriepack nach Anspruch 1, ferner mit einem Isolierband, das zusätzlich an einem Elektrodenanschluss-Freilegungsbereich des abgedichteten Überschussabschnitts angebracht ist.

10. Sekundärbatteriepack nach Anspruch 9, wobei das Isolierband ein doppelseitiges Band ist.

11. Sekundärbatteriepack nach Anspruch 1, ferner mit einem Isolierband, das zusätzlich an zumindest einer von Außenflächen des PCM-Gehäuses angebracht ist.

12. Sekundärbatteriepack nach Anspruch 1, wobei die Batteriezelle ausgestaltet ist, um eine Struktur aufzuweisen, bei welcher eine Elektrodenanordnung, die Kathoden, Anoden und entsprechend zwischen den Kathoden und den Anoden angeordnete Separatoren umfasst, in einem abgedichteten Zustand in einem Batteriegehäuse angeordnet ist, das aus einem Laminatbogen mit einer Metallschicht und einer Harzschicht hergestellt ist.

13. Sekundärbatteriepack nach Anspruch 1, ferner mit einer Nickelplatte, die zusätzlich an einer Fläche des Kathodenanschlusses, an welche der Kathodenanschluss-Verbindungsteil der Platte gekoppelt ist, durch Ultraschallschweißen montiert ist.

14. Sekundärbatteriepack nach Anspruch 1, ferner mit einem Etikett, um die Batteriezelle zu bedecken.

15. Sekundärbatteriepack nach Anspruch 14, wobei das Etikett ausgestaltet ist, um eine Struktur aufzuweisen, um abgedichtete Außenumfänge der Batteriezelle zu bedecken.

16. Verfahren zur Herstellung eines Sekundärbatteriepacks nach Anspruch 1, umfassend:
einen Schritt des Ausbildens einer Batteriezelle, die ausgestaltet ist, um eine Struktur aufzuweisen, bei welcher eine Elektrodenanordnung, die Kathoden, Anoden und entsprechend zwischen den Kathoden und den Anoden angeordnete Separatoren umfasst, in einem abgedichteten Zustand in einem Batteriegehäuse angeordnet wird, wobei einer von abgedichteten Außenumfängen der Batteriezelle einen Überschussabschnitt aufweist;
einen Schritt des Aufnehmens einer Platte in ein Gehäuse, das an einer Fläche davon in einer Ausdehnungsrichtung, die identisch zu einer Ausdehnungsrichtung des abgedichteten Überschussabschnitts ist, geöffnet ist, in einem Zustand, in welchem die Platte parallel zu der Batteriezelle ist; und
einen Schritt des Montierens des Gehäuses an den abgedichteten Überschussabschnitt der Batteriezelle.

17. Verfahren nach Anspruch 16, wobei der Schritt des Montierens des Gehäuses an dem abgedichteten Überschussabschnitt der Batteriezelle einen Schritt des Biegens eines Kathodenanschlusses und eines Anodenanschlusses, als wenn der Kathodenanschluss und der Anodenanschluss zu dem abgedichteten Überschussabschnitt der Batteriezelle hin gewickelt werden, umfasst.

## Revendications

1. Bloc de batterie secondaire comprenant :
un élément de batterie ayant une borne d'anode et une borne de cathode formées sur une face ayant une portion en surplus scellée ; et
un module de circuit de protection (PCM) électriquement connecté à l'élément de batterie via la borne d'anode et la borne de cathode, dans lequel
le PCM comprend :
une plaque sur lequel est formé un circuit de protection, la plaque étant équipé d'une partie de connexion de borne d'anode et d'une partie de connexion de borne de cathode connectées à la borne d'anode et à la borne de cathode respectivement ; et
un boîtier de PCM configuré pour recevoir la plaque par l'intermédiaire d'une face ouverte de celui-ci de sorte que le boîtier de PCM entoure la plaque, et
la plaque est couplée à la borne d'anode et à la borne de cathode de l'élément de batterie via la partie de connexion de borne d'anode et la partie de connexion de borne de cathode, la plaque est disposée dans le boîtier de PCM, et le boîtier de PCM, dans lequel la plaque est disposée, est monté sur la portion en surplus scellée de l'élément de batterie,
**caractérisé en ce que** :
le boîtier de PCM reçoit la plaque dans un état dans lequel la plaque est disposée parallèlement à l'extrémité supérieure de l'élément de batterie,
la borne de cathode et la borne d'anode sont exposées à travers la face ouverte du boîtier de PCM, et
le bloc de batterie secondaire comprend en outre au moins une gorge formée au niveau d'un bord de la face ouverte du boîtier de PCM.

2. Bloc de batterie secondaire selon la revendication 1, dans lequel l'élément de batterie est un élément de batterie en forme de plaque, et la borne d'anode et la borne de cathode sont des organes conducteurs en forme de plaque.

3. Bloc de batterie secondaire selon la revendication 1, dans lequel la plaque comprend en outre une borne externe d'entrée et de sortie.

4. Bloc de batterie secondaire selon la revendication 3, dans lequel la borne externe d'entrée et de sortie est formée au niveau de la plaque au niveau de laquelle la partie de connexion de borne d'anode et la partie de connexion de borne de cathode sont formées via une partie d'interconnexion.

5. Bloc de batterie secondaire selon la revendication 3, dans lequel la borne externe d'entrée et de sortie est formée sur la plaque au niveau de laquelle la partie de connexion de borne d'anode et la partie de connexion de borne de cathode sont formées.

6. Bloc de batterie secondaire selon la revendication 3, dans lequel la borne externe d'entrée et de sortie est formée au niveau de l'autre face de la plaque au niveau de laquelle la partie de connexion de borne d'anode et la partie de connexion de borne de cathode sont formées.

7. Bloc de batterie secondaire selon la revendication 4, dans lequel le boîtier de PCM comprend en outre une ouverture formée au niveau d'une face adjacente à la face ouverte de celui-ci

8. Bloc de batterie secondaire selon la revendication 7, dans lequel l'ouverture est une ouverture de type fente.

9. Bloc de batterie secondaire selon la revendication 1, comprenant en outre un ruban isolant attaché en plus à une région d'exposition de borne d'électrode de la portion en surplus scellée.

10. Bloc de batterie secondaire selon la revendication 9, dans lequel le ruban isolant est un ruban double face.

11. Bloc de batterie secondaire selon la revendication 1, comprenant en outre un ruban isolant attaché en plus à au moins une des faces externes du boîtier de PCM.

12. Bloc de batterie secondaire selon la revendication 1, dans lequel l'élément de batterie est configuré pour avoir une structure dans laquelle un ensemble d'électrodes, comprenant des cathodes, des anodes et des séparateurs disposés respectivement entre les cathodes et les anodes, est disposé dans un boîtier de batterie faite d'une feuille stratifiée comprenant une couche de métal et une couche de résine dans un état scellé.

13. Bloc de batterie secondaire selon la revendication 1, comprenant en outre une plaque de nickel montée sur une face de la borne de cathode, à laquelle la partie de connexion de borne de cathode de la plaque est couplée, par soudage aux ultrasons.

14. Bloc de batterie secondaire selon la revendication 1, comprenant en outre une étiquette pour recouvrir l'élément de batterie.

15. Bloc de batterie secondaire selon la revendication 14, dans lequel l'étiquette est configurée pour avoir une structure pour recouvrir des circonférences externes scellées de l'élément de batterie.

16. Procédé de fabrication d'un Bloc de batterie secondaire selon la revendication 1 comprenant :
une étape de formation d'un élément de batterie configuré pour avoir une structure dans laquelle un ensemble d'électrodes, comprenant des cathodes, des anodes et des séparateurs disposés respectivement entre les cathodes et les anodes, est disposé dans un boîtier de batterie dans un état scellé, une des circonférences externes scellées de l'élément de batterie ayant une portion en surplus ;
une étape de réception d'une plaque dans un boîtier ouvert sur une face de celui-ci dans une direction d'extension identique à une direction d'extension de la portion en surplus scellée dans un état dans lequel la plaque est parallèle à l'élément de batterie ; et
une étape de montage du boîtier sur la portion en surplus scellée de l'élément de batterie.

17. Procédé selon la revendication 16 dans lequel l'étape de montage du boîtier sur la portion en surplus scellée de l'élément de batterie comprend une étape de cintrage d'une borne de cathode et une borne d'anode comme si la borne de cathode et la borne d'anode étaient enroulées vers la portion en surplus scellée de l'élément de batterie.
